# EUROPEAN PATENT APPLICATION

(11) **EP 3 697 116 A1**
(43) Date of publication of application: **19.08.2020**
(21) Application number: 18866578.0
(22) Date of filing: 20.08.2018
(51) Int. Cl.: H04W 8/04, H04W 76/10

(54) **COMMUNICATION NETWORK ROAMING MANAGEMENT METHOD, DEVICE, EQUIPMENT, SYSTEM AND STORAGE MEDIUM**

(30) Priority: 11.10.2017 CN 201710939872
(71) Applicant: ZTE Corporation, Shenzhen, Guangdong 518057 (CN)
(72) Inventor: GUO, Hua, Shenzhen Guangdong 518057 (CN)
(74) Representative: Ipsilon
(86) International application number: PCT/CN2018/101388
(87) International publication number: WO 2019/072022

(57) **Abstract**

Disclosed in the present disclosure are a method and an apparatus for communication network roaming management, a device, a system and a storage medium. The method includes: receiving a subscription information acquisition request for requesting subscription information of a user to be registered from a first communication network; acquiring the subscription information of the user to be registered in a home communication network; and sending the subscription information to the first communication network to complete registration of the user to be registered in the first communication network.

## Description

### CROSS-REFERENCE TO RELATED APPLICATION

The present application is based on and claims a priority from the Chinese patent application No. 201710939872.8 filed on October 11, 2017, the entire disclosure of which is incorporated herein by reference.

### TECHNICAL FIELD

The present disclosure relates to, but is not limited to, the communication field, and particularly relates to a method and an apparatus for communication network roaming management, a device, a system and a storage medium.

### BACKGROUND

With the constant speed-up of deployment of the 5th-Generation (5G) mobile communication technology, the 5G network of telecom operators faces a problem of roaming interworking with the traditional Evolved Packet Core (EPC) network.

In a network including a 5th-Generation Core (5GC), the EPC and 5GC roaming procedures given in specification 23.501 of the 3rd Generation Partnership Project (3GPP) include:
1. when a user roams in an EPC network, completing a registration procedure for a Mobility Management Entity (MME), including registering the MME to a Home Location Register (HLR)/Home Subscriber Server (HSS); and
2. when a user roams in a 5GC network, completing a registration procedure for an Access and Mobility Management Function (AMF) and a Session Management Function (SMF), including that the AMF and SMF call a registration service of Unified Data Management (UDM).

Based on the above roaming procedures specified in 3GPP 23.501, the user stores respective subscription information in HSS and UDM, respectively. When the user roams and registers in an EPC network, the EPC subscription information of the user is registered and downloaded in an HLR/HSS through a signaling protocol DIAMETER; and when the user roams to a 5G network, the 5GC subscription information of the user is downloaded by calling the registration service of the UDM through a Hypertext Transfer Protocol (HTTP) of a service-oriented interface. That is, there is a problem of network non-interworking during roaming of the user.

### SUMMARY

In view of this, embodiments of the present disclosure are expected to provide a method and an apparatus for communication network roaming management, a device, a system and a storage medium that can realize network interworking during roaming of a user.

In an embodiment of the present disclosure, there is provided a method for communication network roaming management, including: receiving a subscription information acquisition request for requesting subscription information of a user to be registered from a first communication network; acquiring the subscription information of the user to be registered in a home communication network; and sending the subscription information to the first communication network to complete registration of the user to be registered in the first communication network.

In an embodiment of the present disclosure, there is further provided an apparatus for communication network roaming management, including: a receiving module configured to receive a subscription information acquisition request for requesting subscription information of a user to be registered from a first communication network; an acquiring module configured to acquire the subscription information of the user to be registered in a home communication network; and a sending module configured to send the subscription information to the first communication network to complete registration of the user to be registered in the first communication network.

In an embodiment of the present disclosure, there is further provided a roaming interworking function (IWF) device for communication networks, including a processor, a memory, and a communication bus, wherein the communication bus is configured to enable connective communication between the processor and the memory; and the processor is configured to execute one or more programs stored in the memory to implement the above method for communication network roaming management provided in the embodiment of the present disclosure.

In an embodiment of the present disclosure, there is further provided a communication system, including at least two communication networks, and the above roaming IWF device for communication networks provided in the embodiment of the present disclosure.

In an embodiment of the present disclosure, there is further provided a computer storage medium having a computer executable instruction stored thereon which, when executed by a processor, causes the above method for communication network roaming management provided in the embodiment of the present disclosure to be executed.

The embodiments of the disclosure have the following beneficial effects.

According to the method and apparatus for communication network roaming management, device, system and storage medium provided in the embodiments of the present disclosure, a subscription information acquisition request for requesting subscription information of a user to be registered is received from a first communication network; the subscription information of the user to be registered in a home communication network is acquired; and the subscription information is sent to the first communication network to complete registration of the user to be registered in the first communication network. By adopting this solution, for an operator deploying only the home communication network, the subscription information of the user in the home communication network is provided for the first communication network when the user roams to the first communication network so that the operator of the first communication network can allow the user to roam in the first communication network without additionally deploying a network device for the first communication network, thereby providing better roaming service experience for the user in both the first communication network and the home communication network.

Additional features and corresponding beneficial effects of the present disclosure are set forth in the following description, and it is to be understood that at least some of the beneficial effects will become obvious from the description of the present disclosure.

### BRIEF DESCRIPTION OF THE DRAWINGS

FIG. 1 is a flowchart of a method for communication network roaming management according to an embodiment of the present disclosure;
FIG. 2 is a flowchart illustrating registration of a terminal of a 5GC network operator roaming to an EPC network according to an embodiment of the present disclosure;
FIG. 3 is an architecture diagram illustrating a terminal of a 5GC network operator roaming to access an EPC network having only a Universal Mobile Telecommunications System Terrestrial Radio Access Network (E-UTRAN) according to an embodiment of the present disclosure;
FIG. 4 is a flowchart illustrating registration of a terminal of an EPC network operator roaming to a 5GC network according to an embodiment of the present disclosure;
FIG. 5 is an architecture diagram illustrating a terminal of an EPC network operator roaming to access a 5GC network having only a New Radio (NR) according to an embodiment of the present disclosure;
FIG. 6 is a schematic diagram of an apparatus for communication network roaming management according to an embodiment of the present disclosure; and
FIG. 7 is a schematic diagram of a roaming InterWorking Function (IWF) device for communication networks according to an embodiment of the present disclosure.

### DETAILED DESCRIPTION

The present disclosure will be described in further detail below with reference to the drawings and embodiments. It will be appreciated that the specific embodiments described herein are merely for illustration of the disclosure and are not intended to limit the disclosure.

The inventor finds in research that, to solve the problem of network non-interworking during roaming of a user, the following solution may be adopted: for an operator deploying only a 5GC network, deploying an HSS in addition to a UDM, so as to provide an EPC roaming service for the user; and for an operator deploying only an EPC network, deploying a UDM in addition to HSS, so as to provide a 5G roaming service for the user. However, this solution is costly.

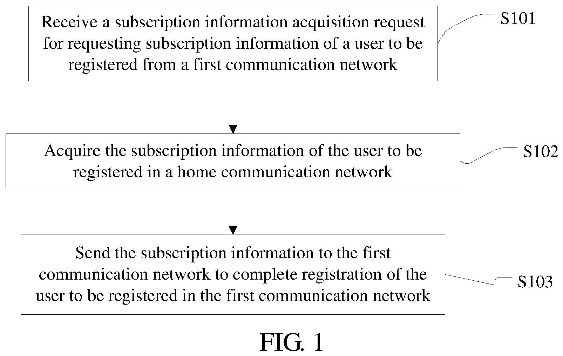

In order to solve the problem that HSS and UDM need to be deployed at the same time to implement network interworking during roaming of the user, in an embodiment, there is provided a method for communication network roaming management. As shown in FIG. 1, which shows a flowchart of a method for communication network roaming management provided in the embodiment, the method includes the following steps S101 to S103.

At S101, a subscription information acquisition request for requesting subscription information of a user to be registered is received from a first communication network.

At S102, the subscription information of the user to be registered in a home communication network is acquired.

At S103, the subscription information is sent to the first communication network to complete registration of the user to be registered in the first communication network.

In an embodiment, the first communication network is an EPC network, and the home communication network is a 5GC network; or the first communication network is a 5GC network, and the home communication network is an EPC network.

For example, when a terminal of a 5GC network operator roams to an EPC network, an MME of the EPC network receives a subscription information acquisition request from the EPC network, communicates with a roaming IWF device to acquire subscription information of a terminal user in the 5GC network, and sends the subscription information of the terminal user in the 5GC network to the EPC network so that the EPC network completes registration of the user to be registered.

For example, when a terminal of an EPC network operator roams to a 5GC network, an AMF of the 5GC network receives a subscription information acquisition request from the 5GC network, communicates with a roaming IWF device to acquire subscription information of a terminal user in the EPC network, and sends the subscription information of the terminal user in the EPC network to the 5GC network so that the 5GC network completes registration of the user to be registered.

In an embodiment, the step S102 of acquiring the subscription information of the user to be registered in the home communication network is performed in a manner including at least one of:
(i) when the first communication network is an EPC network, and the home communication network is a 5GC network, communicating with an AMF or UDM in the 5GC network via a roaming IWF device to acquire the subscription information of the user to be registered in the 5GC network stored in the UDM; and when the first communication network is a 5GC network, and the home communication network is an EPC network, communicating with an MME or HSS in the EPC network via a roaming IWF device to acquire the subscription information of the user to be registered in the EPC network stored in the HSS; and
(ii) acquiring subscription information of the user to be registered in the home communication network from a unified storage space storing the subscription information of the user to be registered in all communication networks, such as the subscription information of the user to be registered in the EPC network and the 5GC network.

In an embodiment, the step S101 of receiving the subscription information acquisition request from the first communication network is performed in a manner including at least one of:
(i) receiving the subscription information acquisition request sent from a subscription information storage device in the first communication network; and
(ii) receiving the subscription information acquisition request sent from a user access management device in the first communication network.

When the first communication network is an EPC network, the subscription information storage device is an HSS; and when the first communication network is a 5GC network, the subscription information storage device is a UDM.

When the first communication network is an EPC network, the user access management device is an MME; and when the first communication network is a 5GC network, the subscription information storage device is an AMF.

In an embodiment, the step S103 of sending the subscription information to the first communication network includes: acquiring a first signaling message format supported by the first communication network; constructing an acquisition response carrying the subscription information and satisfying the first signaling message format; and sending the acquisition response.

In an embodiment, the step of sending the acquisition response is performed in a manner including at least one of:
(i) sending the acquisition response to a subscription information storage device in the first communication network; and
(ii) sending the acquisition response to a user access management device in the first communication network.

When the first communication network is an EPC network, the subscription information storage device is an HSS; and when the first communication network is a 5GC network, the subscription information storage device is a UDM.

When the first communication network is an EPC network, the user access management device is an MME; and when the first communication network is a 5GC network, the subscription information storage device is an AMF.

In an embodiment, the step S102 of acquiring the subscription information of the user to be registered in the home communication network includes: inquiring a home communication network of the user to be registered; sending a subscription information calling request for calling the subscription information of the user to be registered in the home communication network to the home communication network; receiving a calling response sent from the home communication network; and extracting the subscription information carried in the calling response.

In an embodiment, the step of sending the subscription information calling request to the home communication network includes: acquiring a second signaling message format supported by the home communication network; converting the subscription information acquisition request into the subscription information calling request satisfying the second signaling message format; and sending the subscription information calling request.

In an embodiment, the step of sending the subscription information calling request is performed in a manner including at least one of:
(i) sending the subscription information calling request to a subscription information storage device in the home communication network; and
(ii) sending the subscription information calling request to a user access management device in the home communication network.

When the home communication network is an EPC network, the subscription information storage device is an HSS; and when the home communication network is a 5GC network, the subscription information storage device is a UDM.

When the home communication network is an EPC network, the user access management device is an MME; and when the home communication network is a 5GC network, the subscription information storage device is an AMF.

The following two examples are presented for further illustration.

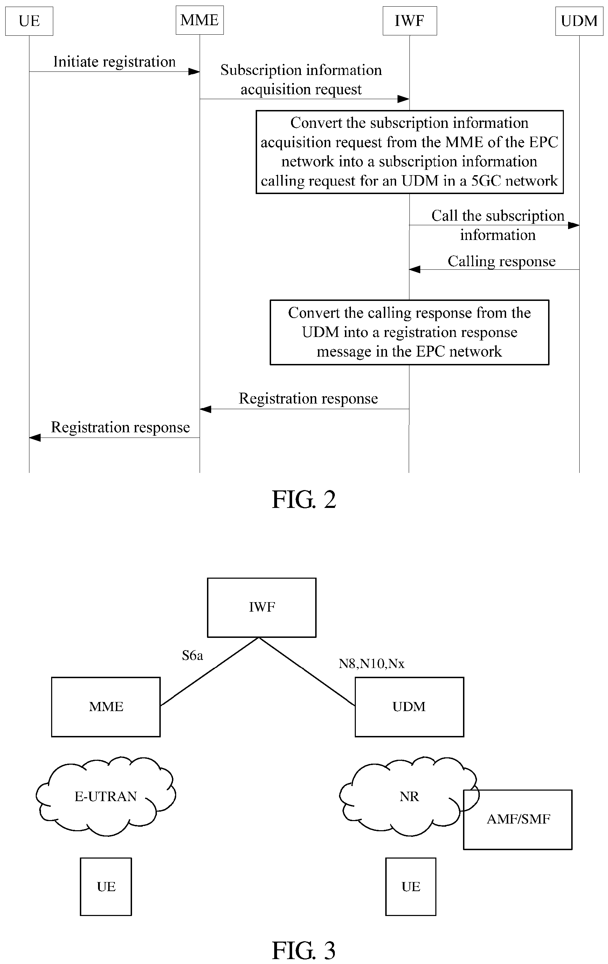

Referring to FIG. 2, which shows a flowchart illustrating registration of a terminal of a 5GC network operator roaming to an EPC network according to the embodiment, the process includes the following six steps.

At a first step, a terminal of a 5GC network operator roams to an EPC network and initiates registration to the MME in the EPC network.

At a second step, the MME sends a subscription information acquisition request to an IWF (a roaming interworking function device), the subscription information acquisition request is used for requesting subscription information of a user to be registered.

At a third step, the IWF receives the subscription information acquisition request from the MME of the EPC network, and converts it into a subscription information calling request for an UDM in a 5GC network, the subscription information calling request is used for calling the subscription information of the user to be registered in the 5GC network.

At a fourth step, the UDM carries out calling according to the subscription information calling request, and returns a calling response carrying the subscription information of the user to be registered in the 5GC network to the IWF.

At a fifth step, the IWF converts the calling response from the UDM into a registration response message in the EPC network.

At a sixth step, the MME returns a registration response to the terminal.

In addition to acquiring the subscription information of the user to be registered in the 5GC network from the UDM, the roaming IWF device also updates a 5GC position related information of the terminal.

When a user of a 5GC network roams to an EPC network, the MME in the EPC network completes the registration procedure to the EPC network via the roaming IWF device. When receiving an EPC subscription information acquisition request in a mobile network, the roaming IWF device completes roaming registration of the user in the EPC network by executing conversion between a signaling message DIAMETER and the service call.

It can be known from the above process that, compared with the 3GPP standard flow, the implementation flow of the example shown in FIG. 2 does not need any modification of the existing network devices except for adding a roaming IWF device, and the flow does not have any change, thereby greatly saving the cost.

Referring to FIG. 3, FIG. 3 is an architecture diagram illustrating a terminal of a 5GC network operator roaming to access an EPC network having only a Universal Mobile Telecommunications System Terrestrial Radio Access Network (E-UTRAN) according to the embodiment.

In FIG. 3, a terminal UE of a 5GC network operator roams to access an EPC network having only an E-UTRAN and initiates registration in the EPC network; an MME sends a registration request message to an IWF (a roaming interworking function device) via an interface S6a; after receiving the MME registration request message from the EPC network, the IWF converts it into a service call of a UDM in the 5GC network, and sends the service call to the UDM via an interface N8, N10 or Nx; the UDM carries out the call and returns a calling response carrying subscription information of the user to be registered; the IWF converts the calling response from the UDM into a registration response message in an EPC network; and the MME returns a registration response to the UE.

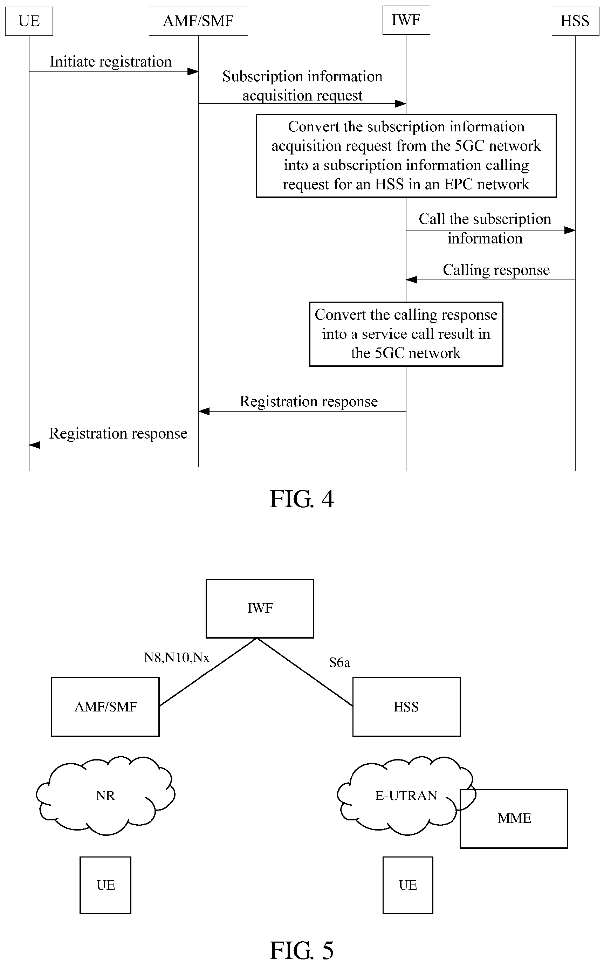

Referring to FIG. 4, which shows a flowchart illustrating registration of a terminal of an EPC network operator roaming to a 5GC network according to the embodiment, the process includes the following six steps.

At a first step, a terminal of an EPC network operator roams to a 5GC network and initiates registration to an AMF or SMF in the 5GC network.

At a second step, the AMF or SMF sends a subscription information acquisition request to an IWF (a roaming interworking function device), the subscription information acquisition request is used for requesting subscription information of a user to be registered.

At a third step, the IWF receives the subscription information acquisition request from the 5GC network, and converts it into a subscription information calling request for an HSS in the EPC network, the subscription information calling request is used for calling the subscription information of the user to be registered in the EPC network.

At a fourth step, the HSS carries out calling according to the subscription information calling request, and returns a calling response carrying the subscription information of the user to be registered in the EPC network to the IWF.

At a fifth step, the IWF converts the calling response into a service call result in the 5GC network.

At a sixth step, the AMF or SMF returns a registration response to the terminal.

In addition to acquiring the subscription information of the user to be registered in the EPC network from the HSS, the roaming IWF device also updates an EPC position related information of the terminal.

When a user of an EPC network roams to a 5GC network, the AMF in the 5GC network completes the registration procedure to the 5GC network via the roaming IWF device. When receiving a 5GC subscription information acquisition request in a mobile network, the roaming IWF device completes roaming registration of the user in the 5GC network by executing conversion between the service call and a signaling message DIAMETER.

It can be known from the above process that, compared with the 3GPP standard flow, the implementation flow of the example shown in FIG. 4 does not need any modification of the existing network devices except for adding a roaming IWF device, and the flow does not have any change, thereby greatly saving the cost.

Referring to FIG. 5, FIG. 5 is an architecture diagram illustrating a terminal of an EPC network operator roaming to access a 5GC network having only a New Radio (NR) according to the embodiment.

In FIG. 5, a terminal UE of an EPC network operator roams to access a 5GC network having only an NR and initiates registration in the 5GC network; an AMF or SMF sends a service call to an IWF (a roaming interworking function device) via an interface N8, N10 or Nx; after receiving the service call from the 5GC network, the IWF converts it into a registration request message of an HSS in the EPC network, and sends the registration request message to the HSS via an interface S6a; the HSS processes the registeration request and returns a registration response carrying subscription information of the user to be registered; the IWF converts the registration response into a service call result in the 5GC network; and the AMF returns the registration response to the UE.

The terminal provided in the embodiment is at least one of: a Long Term Evolution (LTE) /NR multi-mode multi-standby terminal and an LTE/NR multi-mode single-standby terminal.

By means of a roaming IWF device, this embodiment provides roaming support for both EPC and 5GC. For an operator deploying only a 5GC network, when the user roams to an EPC network, an HSS function is provided for the EPC network through the roaming IWF device; and for an operator deploying only an EPC network, when the user roams to a 5GC network, a UDM function is provided for the 5GC network through the roaming IWF device.

Through the roaming IWF device deployed in the network, conversion between the EPC network message and the 5GC network service call is provided, thereby achieving roaming registration of a user in EPC and 5GC networks. The roaming IWF device avoids simultaneously deployment of HSS and UDM by automatic mapping of EPC and 5GC subscription information. Meanwhile, the problem of inconsistent user data in HSSs and UDMs provided by different equipment manufacturers is avoided.

The embodiment effectively utilizes the user subscription information in the existing UDM of the 5GC, thereby avoiding the deployment of HSS and saving the network cost; meanwhile, the user subscription information in the existing HSS of the EPC can also be effectively utilized, thereby avoiding the deployment of UDM and saving the network cost.

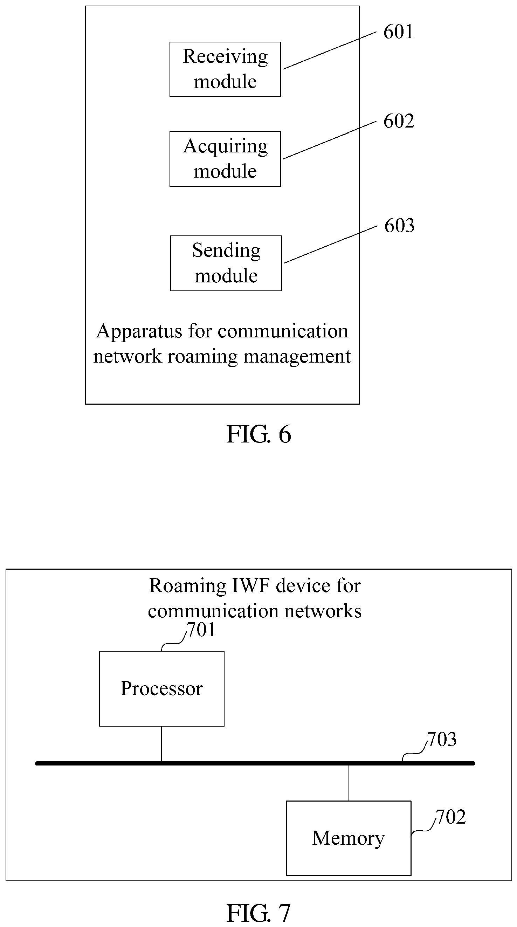

In order to solve the problem that HSS and UDM need to be deployed at the same time to implement network interworking during roaming of the user, in an embodiment, there is provided an apparatus for communication network roaming management. Referring to FIG. 6, which shows a schematic diagram of an apparatus for communication network roaming management according to an embodiment of the present disclosure, the apparatus for communication network roaming management includes a receiving module 601, an acquiring module 602 and a sending module 603.

The receiving module 601 is configured to receive a subscription information acquisition request for requesting subscription information of a user to be registered from a first communication network.

The acquiring module 602 is configured to acquire the subscription information of the user to be registered in a home communication network.

The sending module 603 is configured to send the subscription information to the first communication network to complete registration of the user to be registered in the first communication network.

In an embodiment, the first communication network is an EPC network, and the home communication network is a 5GC network; or the first communication network is a 5GC network, and the home communication network is an EPC network.

For example, when a terminal of a 5GC network operator roams to an EPC network, the receiving module 601 receives a subscription information acquisition request from the EPC network, the acquiring module 602 acquires subscription information of a terminal user in the 5GC network, and the sending module 603 sends the subscription information of the terminal user in the 5GC network to the EPC network so that the EPC network completes registration of the user to be registered.

For example, when a terminal of an EPC network operator roams to a 5GC network, the receiving module 601 receives a subscription information acquisition request from the 5GC network, the acquiring module 602 acquires subscription information of a terminal user in the EPC network, and the sending module 603 sends the subscription information of the terminal user in the EPC network to the 5GC network so that the 5GC network completes registration of the user to be registered.

In an embodiment, the acquiring module 602 acquires the subscription information of the user to be registered in the home communication network in a manner including at least one of:
(i) when the first communication network is an EPC network, and the home communication network is a 5GC network, communicating with an AMF or UDM in the 5GC network to acquire the subscription information of the user to be registered in the 5GC network stored in the UDM; and when the first communication network is a 5GC network, and the home communication network is an EPC network, communicating with an MME or HSS in the EPC network to acquire the subscription information of the user to be registered in the EPC network stored in the HSS; and
(ii) acquiring subscription information of the user to be registered in the home communication network from a unified storage space storing the subscription information of the user to be registered in all communication networks, such as the subscription information of the user to be registered in the EPC network and the 5GC network.

In an embodiment, the receiving module 601 receives the subscription information acquisition request from the first communication network in a manner including at least one of:
(i) receiving the subscription information acquisition request sent from a subscription information storage device in the first communication network; and
(ii) receiving the subscription information acquisition request sent from a user access management device in the first communication network.

When the first communication network is an EPC network, the subscription information storage device is an HSS; and when the first communication network is a 5GC network, the subscription information storage device is a UDM.

When the first communication network is an EPC network, the user access management device is an MME; and when the first communication network is a 5GC network, the subscription information storage device is an AMF.

In an embodiment, the sending module 603 is configured to: acquire a first signaling message format supported by the first communication network; construct an acquisition response carrying the subscription information and satisfying the first signaling message format; and send the acquisition response.

In an embodiment, the sending module 603 sends the acquisition response in a manner including at least one of:
(i) sending the acquisition response to a subscription information storage device in the first communication network; and
(ii) sending the acquisition response to a user access management device in the first communication network.

When the first communication network is an EPC network, the subscription information storage device is an HSS; and when the first communication network is a 5GC network, the subscription information storage device is a UDM.

When the first communication network is an EPC network, the user access management device is an MME; and when the first communication network is a 5GC network, the subscription information storage device is an AMF.

In an embodiment, the acquiring module 602 is configured to: inquire a home communication network of the user to be registered, send a subscription information calling request for calling the subscription information of the user to be registered in the home communication network to the home communication network, receive a calling response sent from the home communication network, and extract the subscription information carried in the calling response.

In an embodiment, the acquiring module 602 sending the subscription information calling request to the home communication network includes: acquiring a second signaling message format supported by the home communication network; converting the subscription information acquisition request into the subscription information calling request satisfying the second signaling message format; and sending the subscription information calling request.

In an embodiment, the acquiring module 602 sending the subscription information calling request is performed in a manner including at least one of:
(i) sending the subscription information calling request to a subscription information storage device in the home communication network; and
(ii) sending the subscription information calling request to a user access management device in the home communication network.

When the home communication network is an EPC network, the subscription information storage device is an HSS; and when the home communication network is a 5GC network, the subscription information storage device is a UDM.

When the home communication network is an EPC network, the user access management device is an MME; and when the home communication network is a 5GC network, the subscription information storage device is an AMF.

The terminal provided in the embodiment is at least one of: an LTE/NR multi-mode multi-standby terminal, and an LTE/NR multi-mode single-standby terminal.

By implementing the embodiment, EPC and 5GC roaming support is provided for the terminal user. For an operator deploying only a 5GC network, when the user roams to an EPC network, an HSS function is provided for the EPC network; and for an operator deploying only an EPC network, when the user roams to a 5GC network, a UDM function is provided for the 5GC network.

With the apparatus for communication network roaming management of the embodiment, conversion between the EPC network message and the 5GC network service call is provided, thereby achieving roaming registration of a user in EPC and 5GC networks. By automatic mapping of EPC and 5GC subscription information, the simultaneous deployment of HSS and UDM is avoided. Meanwhile, the problem of inconsistent user data in HSSs and UDMs provided by different equipment manufacturers is avoided.

The embodiment effectively utilizes the user subscription information in the existing UDM of the 5GC, thereby avoiding the deployment of HSS and saving the network cost; meanwhile, the user subscription information in the existing HSS of the EPC can also be effectively utilized, thereby avoiding the deployment of UDM and saving the network cost.

In order to solve the problem that HSS and UDM need to be deployed at the same time to implement network interworking during roaming of the user, in an embodiment, there is provided a roaming IWF device for communication networks. Referring to FIG. 7, which shows a schematic diagram of a roaming IWF device for communication networks of the embodiment, the roaming IWF device for communication networks includes a processor 701, a memory 702 and a communication bus 703.

The communication bus 703 is configured to enable connective communication between the processor 701 and the memory 702; and the processor 701 is configured to execute one or more programs stored in the memory 702 to implement steps of the method for communication network roaming management provided in the embodiments of the present disclosure.

By implementing the embodiment, EPC and 5GC roaming support is provided for the terminal user. For an operator deploying only a 5GC network, when the user roams to an EPC network, an HSS function is provided for the EPC network; and for an operator deploying only an EPC network, when the user roams to a 5GC network, a UDM function is provided for the 5GC network.

This embodiment provides conversion between the EPC network message and the 5GC network service call, thereby achieving roaming registration of a user in EPC and 5GC networks. By automatic mapping of EPC and 5GC subscription information, the simultaneous deployment of HSS and UDM is avoided. Meanwhile, the problem of inconsistent user data in HSSs and UDMs provided by different equipment manufacturers is avoided.

The embodiment effectively utilizes the user subscription information in the existing UDM of the 5GC, thereby avoiding the deployment of HSS and saving the network cost; meanwhile, the user subscription information in the existing HSS of the EPC can also be effectively utilized, thereby avoiding the deployment of UDM and saving the network cost.

In order to solve the problem that HSS and UDM need to be deployed at the same time to implement network interworking during roaming of the user, in an embodiment, there is provided a communication system, including at least two communication networks, and the roaming IWF device in the above embodiment.

By implementing the embodiment, EPC and 5GC roaming support is provided for the terminal user. For an operator deploying only a 5GC network, when the user roams to an EPC network, an HSS function is provided for the EPC network; and for an operator deploying only an EPC network, when the user roams to a 5GC network, a UDM function is provided for the 5GC network.

This embodiment provides conversion between the EPC network message and the 5GC network service call, thereby achieving roaming registration of a user in EPC and 5GC networks. By automatic mapping of EPC and 5GC subscription information, the simultaneous deployment of HSS and UDM is avoided. Meanwhile, the problem of inconsistent user data in HSSs and UDMs provided by different equipment manufacturers is avoided.

The embodiment effectively utilizes the user subscription information in the existing UDM of the 5GC, thereby avoiding the deployment of HSS and saving the network cost; meanwhile, the user subscription information in the existing HSS of the EPC can also be effectively utilized, thereby avoiding the deployment of UDM and saving the network cost.

In order to solve the problem that HSS and UDM need to be deployed at the same time to implement network interworking during roaming of the user, in an embodiment, there is provided a computer-readable storage medium having one or more programs stored thereon which are executable by one or more processors to implement steps of the method for communication network roaming management provided in the embodiments.

By implementing the embodiment, EPC and 5GC roaming support is provided for the terminal user. For an operator deploying only a 5GC network, when the user roams to an EPC network, an HSS function is provided for the EPC network; and for an operator deploying only an EPC network, when the user roams to a 5GC network, a UDM function is provided for the 5GC network.

This embodiment provides conversion between the EPC network message and the 5GC network service call, thereby achieving roaming registration of a user in EPC and 5GC networks. By automatic mapping of EPC and 5GC subscription information, the simultaneous deployment of HSS and UDM is avoided. Meanwhile, the problem of inconsistent user data in HSSs and UDMs provided by different equipment manufacturers is avoided.

The embodiment effectively utilizes the user subscription information in the existing UDM of the 5GC, thereby avoiding the deployment of HSS and saving the network cost; meanwhile, the user subscription information in the existing HSS of the EPC can also be effectively utilized, thereby avoiding the deployment of UDM and saving the network cost.

Obviously, a person skilled in the art would understand that the above modules and steps in the embodiments of the present disclosure can be realized by using a universal computing device, can be integrated in a single computing device or distributed on a network that consists of a plurality of computing devices, and alternatively, they can be realized by using the executable program code of the computing device, so that they can be stored in a storage device (such as a Read-Only Memory (ROM)/Random Access Memory (RAM), a disk, or an optical disc) and executed by the computing device, in some cases, can perform the shown or described steps in a sequence other than herein, or they are made into various integrated circuit modules respectively, or a plurality of modules or steps thereof are made into a single integrated circuit module, thus to be realized. In this way, the present disclosure is not restricted to any particular hardware and software combination.

The above are further detailed explanation of the embodiments of the present disclosure in conjunction with specific embodiments, and the present disclosure is not to be construed as being limited to these embodiments. It will be apparent to those ordinary skilled in the art to which the present disclosure pertains that several simple deductions or substitutions can be made without departing from the concept of the disclosure, which deductions and substitutions should also be considered as falling within the scope of the disclosure.

## Claims

1. A method for communication network roaming management, comprising:
receiving a subscription information acquisition request for requesting subscription information of a user to be registered from a first communication network;
acquiring the subscription information of the user to be registered in a home communication network; and
sending the subscription information to the first communication network to complete registration of the user to be registered in the first communication network.

2. The method for communication network roaming management according to claim 1, wherein
the first communication network is an EPC network and the home communication network is a 5G network; or
the first communication network is a 5G network and the home communication network is an EPC network.

3. The method for communication network roaming management according to claim 1, wherein the step of receiving the subscription information acquisition request from the first communication network is performed in a manner comprising at least one of:
(i) receiving the subscription information acquisition request sent from a subscription information storage device in the first communication network; and
(ii) receiving the subscription information acquisition request sent from a user access management device in the first communication network.

4. The method for communication network roaming management according to claim 1, wherein the step of sending the subscription information to the first communication network comprises:
acquiring a first signaling message format supported by the first communication network;
constructing an acquisition response carrying the subscription information and satisfying the first signaling message format; and
sending the acquisition response.

5. The method for communication network roaming management according to claim 4, wherein the step of sending the acquisition response is performed in a manner comprising at least one of:
(i) sending the acquisition response to a subscription information storage device in the first communication network; and
(ii) sending the acquisition response to a user access management device in the first communication network.

6. The method for communication network roaming management according to any one of claims 1 to 5, wherein the step of acquiring the subscription information of the user to be registered in the home communication network comprises:
inquiring a home communication network of the user to be registered;
sending a subscription information calling request for calling the subscription information of the user to be registered in the home communication network to the home communication network;
receiving a calling response sent from the home communication network; and
extracting the subscription information carried in the calling response.

7. The method for communication network roaming management according to claim 6, wherein the step of sending the subscription information calling request to the home communication network comprises:
acquiring a second signaling message format supported by the home communication network;
converting the subscription information acquisition request into the subscription information calling request satisfying the second signaling message format; and
sending the subscription information calling request.

8. The method for communication network roaming management according to claim 7, wherein the step of sending the subscription information calling request is performed in a manner comprising at least one of:
(i) sending the subscription information calling request to a subscription information storage device in the home communication network; and
(ii) sending the subscription information calling request to a user access management device in the home communication network.

9. An apparatus for communication network roaming management, comprising:
a receiving module configured to receive a subscription information acquisition request for requesting subscription information of a user to be registered from a first communication network;
an acquiring module configured to acquire the subscription information of the user to be registered in a home communication network; and
a sending module configured to send the subscription information to the first communication network to complete registration of the user to be registered in the first communication network.

10. The apparatus for communication network roaming management according to claim 9, wherein the acquiring module is configured to:
inquire a home communication network of the user to be registered,
send a subscription information calling request for calling the subscription information of the user to be registered in the home communication network to the home communication network,
receive a calling response sent from the home communication network, and
extract the subscription information carried in the calling response.

11. A roaming interworking function device for communication networks, comprising a processor, a memory, and a communication bus; wherein
the communication bus is configured to enable connective communication between the processor and the memory; and
the processor is configured to execute one or more programs stored in the memory to implement the method for communication network roaming management according to any one of claims 1 to 8.

12. A communication system, comprising at least two communication networks, and the roaming interworking function device for communication networks according to claim 11.

13. A computer readable storage medium, having one or more programs stored thereon which, when executable by one or more processors, cause the one or more processors to implement the method for communication network roaming management according to any one of claims 1 to 8.
